# EUROPÄISCHE PATENTANMELDUNG

(11) **EP 2 085 879 A1**
(43) Veröffentlichungstag der Anmeldung: **05.08.2009**
(21) Anmeldenummer: 08002051.4
(22) Anmeldetag: 04.02.2008
(51) Int. Cl.: G06F 9/44

(54) **Verfahren zum Betrieb eines Programmiergerätes, Computerprogramm zur Implementierung des Verfahrens und nach dem Verfahren arbeitendes Programmiergerät oder Programmiergeräte mit einem solchen Computerprogramm**

(71) Anmelder: SIEMENS AKTIENGESELLSCHAFT, 80333 München (DE)
(72) Erfinder: Kapp, Michael, 76189 Karlsruhe (DE); Pohlan, Rudolf, 76337 Waldbronn (DE)

(57) **Zusammenfassung**

Die Erfindung betrifft ein Verfahren zum Betrieb eines Programmiergerätes, ein Computerprogramm zur Implementierung des Verfahrens und ein nach dem Verfahren arbeitendes Programmiergerät oder ein Programmiergerät mit einem solchen Computerprogramm, wobei mit dem Verfahren eine duale Programmierung von Anwenderprogrammen, d. h. eine umschaltbare Möglichkeit zur Programmierung entweder in einer textuellen oder graphischen Darstellung, möglich ist, was dadurch erreicht ist, dass zumindest einzelnen Programmcodeanweisungen, wie sie von dem Anwenderprogramm umfasst sein können, eine Datenvariable als Versorgungsschnittstelle (44) zugeordnet ist, so dass die Versorgungsschnittstelle (44) in der graphischen Darstellung als Eingang eines die jeweilige Programmcodeanweisung, insbesondere eine Kontrollstruktur (42), repräsentierenden Funktionsblocks angezeigt werden kann.

## Beschreibung

Die Erfindung betrifft ein Verfahren zum Betrieb eines Programmiergerätes zum Erstellen oder Verändern von Anwenderprogrammen, insbesondere von Anwenderprogrammen für eine Automatisierungslösung zur Steuerung und/oder Überwachung eines technischen Prozesses. Das Anwenderprogramm wird mittels des Programmiergerätes bei dessen Erstellung um Programmcodeanweisungen ergänzt oder es werden zum Verändern des Anwenderprogramms bestehende Programmcodeanweisungen gelöscht, ergänzt oder modifiziert. Als besondere Form von Programmcodeanweisungen umfasst das Anwenderprogramm dabei Kontrollstrukturen zur Steuerung einer Ausführung eines der Kontrollstruktur zugeordneten Kontrollstrukturrumpfs. Als Beispiel für eine solche Kontrollstruktur - in der Literatur mitunter auch als Steuerkonstrukt bezeichnet - kann auf eine so genannte Schleife verwiesen werden, bei der ein Schleifenrumpf, also der Rumpf dieser speziellen Kontrollstruktur, so lange ausgeführt wird, bis eine Abbruchbedingung eintritt. Kontrollstrukturen werden in imperativen Programmiersprachen verwendet, um den Ablauf eines damit jeweils erstellten Anwenderprogramms zu steuern.

Verfahren der eingangs genannten Art sind allgemein bekannt und die angegebenen Merkmale können bei jeder Form der Erstellung eines Anwenderprogramms unter Verwendung einer imperativen Programmiersprache mittels eines Programmiergerätes und einer darauf üblicherweise zur Verfügung stehenden Entwicklungsumgebung, z. B. einem Editor, als verwirklicht angesehen werden. Nachteilig bei bisherigen derartigen Verfahren zum Betrieb eines Programmiergerätes oder zur Verwendung einer darauf ablaufenden Entwicklungsumgebung ist jedoch die mitunter begrenzte Eignung für eine Visualisierung von Datenflüssen in dem Anwenderprogramm, wie sie speziell einem mit der Erstellung von Automatisierungslösungen befassten Programmierer geläufig sind. Zur Erstellung von Automatisierungslösungen haben sich zwar spezielle graphische Programmiersprachen, wie sie z. B. in der IEC 61131-3 als Funktionsbausteinsprache oder Kontaktplan definiert sind, etabliert. Bei diesen bestehen jedoch nur restriktive Möglichkeiten zur Steuerung eines Programmablaufs, weil dafür z. B. nur Sprungbefehle zur Verfügung stehen. Die häufig bei Programmierern ausbildungsbedingt vorliegenden Kenntnisse höherer Programmiersprachen, wie z. B. Pascal, C, etc., können bei den originär für die Automatisierungstechnik vorgesehenen Programmiersprachen kaum genutzt werden.

Zudem wird beobachtet, dass Aufgabenstellungen in der Automatisierungstechnik immer komplexer werden, während gleichzeitig ein immer höherer Kosten- und Termindruck entsteht. Die Anforderungen an moderne Entwicklungsumgebungen oder Engineering-Systeme und damit auch an die darunter eingesetzten Programmiersprachen konzentrieren sich insoweit verstärkt auf Einfachheit und Effizienz, vor allem weil auf der einen Seite Programmieraufgaben immer schneller gelöst werden müssen und auf der anderen Seite auch Personen ohne umfassende Ausbildung und Vorkenntnisse solche Aufgabenstellungen bewältigen können sollen. Nachdem sich die Hersteller von Automatisierungssystemen heute und in absehbarer Zeit bezüglich der angebotenen Programmiersprachen noch an der Norm IEC 61131-3 orientieren, kommt der innovativen Weiterentwicklung von Programmiersprachen in der Automatisierungstechnik und auch entsprechender Normen eine immer größere Bedeutung zu. Es stellt sich das Problem, programmiertechnische Verfahren zu entwickeln, die die Handhabung und Erlernbarkeit der Programmiersprachen in der Automatisierungstechnik verbessern helfen. Gleichzeitig ist wegen der Notwendigkeit eines Erhalts einer ausreichenden Kundenakzeptanz auf eine weitgehende Normkonformität zu achten.

Die in der der Norm IEC 61131-3 definierten graphischen Programmiersprachen mit der Bezeichnung "Kontaktplan" (KOP; engl. Ladder Diagram oder LD) oder "Funktionsbausteinsprache" (FBS oder FUP; engl. Function Block Diagram oder FBD) erlauben eine Programmierung des Datenflusses und des Programmablaufs nach Art eines Elektro-Schaltplans. Wie bereits erwähnt, sind die Möglichkeiten zur Beeinflussung des Programmablaufs sehr begrenzt. Zudem lassen sich bei solchen Programmiersprachen etwaige Erfahrungen mit anderen Hochsprachen kaum nutzen. Demgegenüber ist die Programmiersprache "Strukturierter Text" (ST; engl. Structured Text) gemäß der Norm IEC 61131-3, bei der eine textuelle Programmierung im Vordergrund steht, eine vollständige Programmiersprache, die mit herkömmlichen Programmierkenntnissen, z. B. Pascal, leicht erlernbar ist. Textuelle Programmiersprachen bieten aber prinzipbedingt keinen Komfort, wenn es darum geht, einen Überblick über den Datenfluss zu gewinnen. Dies ist aber in der Automatisierungstechnik wegen der üblicherweise zyklischen Bearbeitung von Programmen von wesentlicher Bedeutung. Als weitere in der Automatisierungstechnik geläufige Programmiersprache ist "Continuous Function Chart" (CFC) zu nennen. In CFC kann ein Datenfluss - auch mit Signalrückführungen - komfortabel graphisch beschrieben und dargestellt werden. Programmabläufe lassen sich aber nicht bei Hochsprachen üblicher Art und Weise formulieren, weil im Wesentlichen nur Sequenzen von Funktionsaufrufen oder Funktionsbausteinaufrufen unterstützt werden.

Eine Aufgabe der vorliegenden Erfindung besteht entsprechend darin, den o.g. Nachteilen abzuhelfen oder zumindest deren Auswirkungen zu reduzieren, insbesondere die Vorteile der bisher bekannten Programmiersprachen in der Automatisierungstechnik mit den entsprechenden Vorteilen von nicht anwendungsspezifischen Hochsprachen zu kombinieren und insoweit ein duales programmiertechnisches Verfahren für das Programmieren von Automatisierungsgeräten zu ermöglichen. Ergebnis ist dann eine einzigartige Verbindung der Vorteile der graphischen sowie der textuellen Programmiersprachen, wovon insbesondere Anwendungen in der Automatisierungstechnik, also Automatisierungslösungen, profitieren.

Kurz gefasst wird diese Aufgabe dadurch gelöst, dass jeder in einem Anwenderprogramm verwendeten Kontrollstruktur eine im Folgenden als Versorgungsschnittstelle bezeichnete Datenvariable zugeordnet ist. Die Kombination aus Kontrollstruktur und zugehöriger Versorgungsschnittstelle kann wie ein in der Automatisierungstechnik bekannter Funktionsblock aufgefasst werden, wobei die Versorgungsschnittstelle zumindest als Eingang, ggf. als Ein- und Ausgang, für die Kontrollstruktur fungiert und wobei der Begriff Ein- oder Ausgang jeweils zumindest ein Ein- oder Ausgangssignal oder zumindest einen Ein- oder Ausgangsparameter oder eine Kombination mehrerer solcher Signale oder Parameter bezeichnet. Die Funktionalität des auf diese Weise zumindest gedanklich gebildeten Funktionsblocks ist durch die Semantik der Kontrollstruktur bestimmt und dient der Steuerung des jeweils zugeordneten Kontrollstrukturrumpfes (engl. Statement List). Nachdem bei herkömmlichen Kontrollstrukturen, z. B. einer Schleife, z. B. in der Form "FOR x = 1 to 100 {...}", die Variable "x" und die Konstanten "1" und "100" zumindest sprachlich auch als Versorgungsschnittstelle aufgefasst werden könnten, ist zur Unterscheidung vom Ansatz gemäß der Erfindung darauf zu achten, dass diese Parameter unabhängig von der jeweiligen Kontrollstruktur vereinbart sind, weil die Variable "x" z. B. eine lokale oder globale Variable ist und die beiden Werte "1" und "100" Konstante sind. Beim Ansatz gemäß der Erfindung ist jedoch vorgesehen, dass jedem Kontrollstrukturtyp, also jeder Art von Kontrollstruktur, ein Versorgungsschnitt-stellentyp zugeordnet ist. Zur Instanziierung einer Versorgungsschnittstelle bei Verwendung einer Kontrollstruktur dieses Typs steht dann der jeweilige Versorgungsschnittstellentyp zur Verfügung. Für eine Schleife als Sonderform einer Kontrollstruktur gibt es also einen Datentyp, der dieser Form der Kontrollstruktur exklusiv zugeordnet ist und das Ablegen von Daten erlaubt, die zur Versorgung der jeweiligen Kontrollstruktur notwendig sind. Zu jeder Kontrollstruktur wird dann eine Variable des entsprechenden Versorgungsschnittstellentyps als Versorgungsschnittstelle instanziiert. Jedes Mal, wenn also in einem Anwenderprogramm eine Schleife als Kontrollstruktur angelegt wird, wird automatisch mit dem Anlegen einer solchen Kontrollstruktur eine entsprechende Versorgungsschnittstelle instanziiert. Bei einer späteren Ausführung des auf diese Weise entstandenen Anwenderprogramms ergibt sich, dass die Kontrollstruktur den Kontrollstrukturrumpf ausschließlich anhand von Daten gemäß der Versorgungsschnittstelle aufruft.

Der Vorteil der Erfindung besteht vor allem darin, dass mit dem oben skizzierten und nachfolgend weiter erläuterten Ansatz jeweils Kontrollstruktur und zugehörige Versorgungsschnittstelle engst kombiniert sind. Jede Kontrollstruktur kann damit, durch Zugriff auf die Daten der Versorgungsschnittstelle, ohne weiteres wie ein Funktionsbaustein dargestellt werden. Eine solche Darstellung ist einem Programmierer, der sich normalerweise nur mit der Erstellung von Anwenderprogrammen unter Verwendung von in der Automatisierungstechnik geläufigen Programmiersprachen befasst, unmittelbar verständlich. Darüber hinaus ist eine Darstellung des Datenflusses möglich.

Als wesentlicher Vorteil ist darüber hinaus die Möglichkeit des programmierten Zugriffs auf die als Variable ausgebildete Versorgungsschnittstelle zu nennen. Daraus ergibt sich die Möglichkeit, die als Variable ausgebildete Versorgungsschnittstelle mit Test- und Inbetriebsetzungswerkzeugen als auch mit den aus der Automatisierungstechnik bekannten Bedien- und Beobachtungswerkzeugen zu überwachen.

Soweit die Erfindung auch ein Programmiergerät zur Ausführung des eingangs skizzierten und nachfolgend weiter beschriebenen Verfahrens sowie seiner Ausgestaltungen betrifft, wird die o.g. Aufgabe auch dadurch gelöst, dass das Programmiergerät zum Erstellen oder Verändern des Anwenderprogramms eine einen Editor umfassende Entwicklungsumgebung oder zumindest einen solchen Editor als Einzelprogramm umfasst, der eine umschaltbare Darstellung des Anwenderprogramms in graphischer Form oder textueller Form erlaubt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Sowohl für das Verfahren zum Betrieb des Programmiergeräts als auch für das Programmiergerät gilt, dass mit der Zuordnung jeweils einer Versorgungsschnittstelle zu jeder Kontrollstruktur ein so enger Zusammenhang zwischen Kontrollstruktur und der deren Ausführung beeinflussenden Daten hergestellt ist, dass auf dieser Basis eine umschaltbare Darstellung in graphischer oder textueller Form möglich wird, so dass eine duale Programmiertechnik möglich ist, bei welcher der Anwender die ihm für die jeweilige Situation geeignet erscheinende Darstellungsweise wählen kann.

Bevorzugt ist dabei vorgesehen, dass bei einer graphischen Darstellung des Anwenderprogramms oder Teilen desselben jede Kontrollstruktur mit ihrer Versorgungsschnittstelle als Eingang und/oder Ausgang dargestellt wird. Die Kontrollstruktur wird damit genau wie jeder einfache oder komplexe Funktionsblock dargestellt, wobei als einfacher Funktionsblock die graphische Repräsentation eines UND-Gatters genannt werden kann, das in einer einfachen Konstellation zwei Eingänge aufweist, über die dem Gatter die beiden zu verknüpfenden Daten übergeben werden. Die Parallelität geht aber noch weiter. Dem UND-Gatter ist eine jeweilige Funktionalität zugeordnet. Hier also eine Funktionalität, um die als Eingangsparameter übergebenen Daten einer logischen UND-Verknüpfung zu unterwerfen. Einer Kontrollstruktur ist die Funktionalität der Steuerung des jeweiligen Kontrollstrukturrumpfs zugeordnet, wobei die jeweilige Kontrollstruktur zur Ausführung des Kontrollstrukturrumpfs eine Auswertung der Versorgungsschnittstelle impliziert, so dass z. B. sichergestellt ist, dass bei einer Schleife als Kontrollstruktur der Kontrollstrukturrumpf nur dann ausgeführt wird, solange die jeweilige Iterationsbedingung entsprechend der von der Versorgungsschnittstelle umfassten Daten erfüllt ist.

Weiter bevorzugt ist vorgesehen, dass eine graphische Darstellung des Anwenderprogramms einen Datenfluss umfasst, in dem dargestellt wird, wodurch der Eingang einer Kontrollstruktur und somit die Ausführung des Kontrollstrukturrumpfs gesteuert wird, also z. B., ob der Eingang einer Kontrollstruktur die Ausführung des Kontrollstrukturrumpfs erlaubt. Eine solche Darstellung entspricht einer Darstellung, wie sie in der Automatisierungstechnik für dort geläufige Programmiersprachen ebenfalls seit langem bekannt ist, indem z. B. bei der logischen Verknüpfung zweier Eingangssignale, um daraus ein Ausgangssignal zu gewinnen, der Status der Eingangssignale und des Ausgangssignals angezeigt wird, so dass, wenn die Eingangssignale z. B. einer logischen UND-Verknüpfung unterworfen werden sollen und sich ein Ausgangssignal entsprechend nur dann einstellt, wenn beide Eingangssignale anstehen, unmittelbar erkennbar ist, ob das Ausgangssignal ansteht oder, wenn dieses nicht ansteht, aufgrund des Ausbleibens welchen Eingangssignals das Ausgangssignal nicht erhältlich ist.

In Fortführung des oben skizzierten Konzeptes ist vorteilhaft vorgesehen, dass bei einem Anwenderprogramm, das auch unäre oder binäre Operationen, also entsprechende Operatoren, umfasst, also z. B. Zuweisungen der Art "x = 3" oder Operationen der Art "X = a x b", für jede solche Operation eine zur Art der Operation oder dem jeweiligen Operator passende Versorgungsstelle instanziiert wird. Auch für solche unären oder binären Operationen, im Folgenden zusammenfassend als Operation bezeichnet, ist dann in einer besonders bevorzugten Ausführungsform jedem Operationstyp zur Instanziierung einer Versorgungsschnittstelle bei Verwendung einer Operation dieses Typs ein Versorgungsschnittstellentyp zugeordnet. Durch das Vorsehen einer Versorgungsschnittstelle auch für alle in einem Anwenderprogramm verwendeten Operationen wird das durch die Erfindung mögliche duale programmiertechnische Verfahren auch für solche Programmcodeanweisungen verwendbar. Eine Umsetzung dieser Dualität auch für bisher nicht explizit angesprochene Programmcodeanweisungen, etwa Funktionsaufrufe und dergleichen, ist ohne weiteres in Fortsetzung des hier beschriebenen und nachfolgend weiter erläuterten Prinzips möglich.

Besonders bevorzugt ist vorgesehen, dass für jede oder einzelne als Versorgungsschnittstelle instanziierte Variable oder Variablen eine unbeschränkte Lebensdauer auswählbar ist. Als Lebensdauer einer Variablen versteht man bekanntlich den Zeitraum, in dem für die Variable Speicherplatz reserviert und die Variable gültig ist. Wird Speicherplatz für andere Zwecke wieder freigegeben, etwa bei lokalen Variablen bei Verlassen des jeweiligen Gültigkeitsbereichs, ist die Variable nicht mehr nutzbar. Es gibt jedoch die Möglichkeit, nur die Sichtbarkeit einer Variablen einzuschränken, nicht aber ihre Lebensdauer. In der Programmiersprache C oder darin angelehnten Programmiersprachen ist dazu bei der Deklaration der Zusatz "static" vorgesehen. Die Sichtbarkeit einer solchen Variablen verhält sich also wie die einer lokalen Variablen. Die Lebensdauer entspricht dagegen derjenigen einer globalen Variablen. Bei einer unbeschränkten Lebensdauer einer Versorgungsschnittstelle hat diese damit ein "statisches Gedächtnis", so dass vorteilhaft eine Beobachtung der von der Schnittstelle umfassten Daten auch noch nach Ausführung der jeweiligen Programmcodeanweisung möglich ist. Die Entscheidung gegen die Realisierung einzelner oder aller Versorgungsschnittstellen durch Abbildung auf statischen Variablen sorgt allerdings normalerweise für eine bessere Laufzeiteffizienz.

Soweit die Erfindung wie oben beschrieben auch das Programmiergerät zur Ausführung des Verfahrens betrifft, ist vorteilhaft vorgesehen, dass zur umschaltbaren Darstellung des Anwenderprogramms ein Mittel zur Auswahl eines Darstellungsmodus vorgesehen ist und je nach Darstellungsmodus die oder jede Kontrollstruktur entweder in textueller Form mit Daten aus der Versorgungsschnittstelle in ebenfalls textueller Form oder als graphischer Funktionsblock mit der Versorgungsschnittstelle als Eingang und/oder Ausgang darstellbar ist. Das oder die Mittel zur Auswahl eines Darstellungsmodus ist einerseits eine Peripherie des Programmiergerätes, mit dem ein Anwender Eingaben beim Programmiergerät tätigt, also eine Tastatur und/oder eine Zeigeeinrichtung, wie eine Maus oder dergleichen. Mit einer solchen Peripherie wird jedoch nur ein Zugriff auf eine Funktionalität des Programmiergeräts, die eine Darstellung des Anwenderprogramms steuert, ermöglicht. Insoweit umfassen die o.g. Mittel auch Programmcodemittel, durch die ein ausgewählter Darstellungsmodus codierbar ist, im einfachsten Fall also z. B. ein so genanntes Flag, das in einem ersten Zustand eine Darstellung des Anwenderprogramms in textueller Form, in einem anderen Zustand eine Darstellung in graphischer Form bewirkt.

Zur Verbesserung der Sicherheit beim Betrieb des Programmiergerätes ist vorgesehen, dass das Programmiergerät, insbesondere eine davon umfasste Software, so ausgebildet ist, dass, wenn beim Erstellen oder Verändern des Anwenderprogramms eine Kontrollstruktur eingefügt wird, das Einfügen der Kontrollstruktur eine automatische Instanziierung einer zum Typ der Kontrollstruktur passenden Versorgungsschnittstelle bewirkt. Umgekehrt kann bei einer solchen engen Verknüpfung eine Kontrollstruktur auch dadurch angelegt werden, dass eine Versorgungsschnittstelle vom jeweiligen Versorgungsschnittstellentyp instanziiert wird. Dann ist gewährleistet, dass unmittelbar mit einem Einfügen einer Kontrollstruktur auf die eine oder andere Art eine umschaltbare Darstellung wie oben beschrieben möglich ist. Ohne die automatische Instanziierung einer zum Typ der Kontrollstruktur passenden Versorgungsschnittstelle müsste das Anlegen der Versorgungsschnittstelle dem Benutzer des Programmiergerätes überlassen werden, so dass zwischen dem Anlegen der Kontrollstruktur und dem Anlegen der Versorgungsschnittstelle ein Zeitraum verbleiben kann, zu dem die Kontrollstruktur, zumindest jedoch ein damit assoziierter Datenfluss, nicht sinnvoll graphisch dargestellt werden kann.

Das o.g. Verfahren wird bevorzugt in Software implementiert, so dass die Erfindung auch ein Computerprogramm mit durch einen Computer ausführbaren Programmcodeanweisungen zur Implementierung des hier und nachfolgend beschriebenen Verfahrens betrifft. Damit betrifft die Erfindung aber auch ein Computerprogrammprodukt, insbesondere ein Speichermedium mit einem durch einen Computer ausführbaren derartigen Computerprogramm. Als Computer kommt dabei natürlich bevorzugt das Programmiergerät in Betracht, so dass hier von einer synonymen Verwendung der Begriffe Programmiergerät und Computer ausgegangen werden kann.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Darin zeigen
- FIG 1: ein Automatisierungssystem zur Steuerung eines technischen Prozesses mit einem dafür vorgesehenen Automatisierungsgerät, das ein mit einem Programmiergerät erstell- und modifizierbares Anwenderprogramm ausführt,
- FIG 2: eine schematisch vereinfachte Darstellung zur Interaktion zwischen Programmiergerät und Automatisierungsgerät,
- FIG 3: Kontrollstrukturen, wie sie als Programmcodeelemente von einem durch ein Automatisierungsgerät ausführbaren Anwenderprogramm umfasst sein können,
- FIG 4: zur Verdeutlichung des Konzepts der dualen Programmierung eine exemplarische Kontrollstruktur mit einer dieser als Versorgungsschnittstelle zugeordneten Datenvariable,
- FIG 5: weitere Kontrollstrukturen,
- FIG 6: Operationen, wie sie als Programmcodeelemente ebenfalls von einem durch ein Automatisierungsgerät ausführbaren Anwenderprogramm umfasst sein können, zur Verdeutlichung, dass auch diesen als Versorgungsschnittstelle eine Datenvariable zuordenbar ist,
- FIG 7: eine vereinfachte Darstellung der Bildschirmansicht eines Editors zur Umsetzung des Ansatzes gemäß der Erfindung und
- FIG 8 und 9: Darstellungen eines Abschnitts eines Anwenderprogramms in graphischer bzw. textueller Form zur Verdeutlichung des Aspekts der dualen Programmierung, wobei die Dualität da herrührt, dass beide Darstellungen vom Editor koexistierend erzeugt oder bereitgehalten werden und eine Programmierung sowohl in textueller als auch graphischer Form möglich ist.

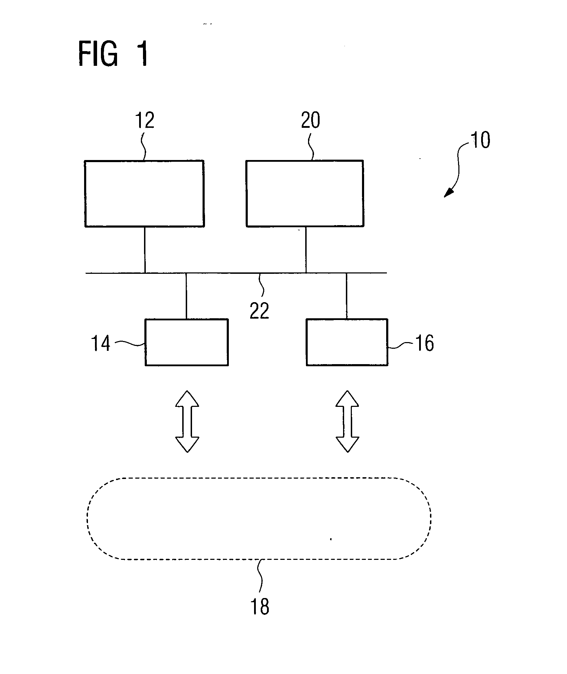

FIG 1 zeigt ein schematisch vereinfacht dargestelltes und insgesamt mit 10 bezeichnetes Automatisierungssystem, das ein oder mehrere Automatisierungsgeräte 12 umfasst und über Sensoren und Aktoren 14, 16 Signale mit einem nicht näher dargestellten, zu steuernden und überwachenden technischen Prozess 18 austauscht. Zu dem Automatisierungssystem kann auch ein Programmiergerät 20 gehören. Das Programmiergerät 20 ist dabei zumindest temporär kommunikativ mit dem Automatisierungsgerät 12 verbunden, z. B. über einen Bus 22, insbesondere einen so genannten Feldbus. Im Einzelfall kann die Funktionalität eines Programmiergeräts 20 auch vom Automatisierungsgerät 12 umfasst sein. Des Weiteren besteht ohne weiteres die Möglichkeit, bei bestimmten Automatisierungsgeräten 12 das Programmiergerät 20 direkt an das Automatisierungsgerät 12 anzuschließen, also ohne für die kommunikative Verbindung auf eine Busverbindung zurückgreifen zu müssen.

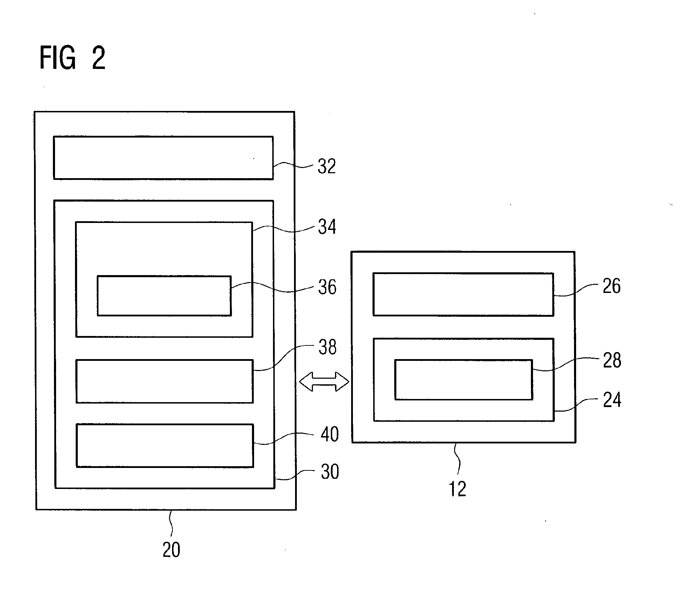

In FIG 2 ist schematisch vereinfacht eine Interaktion zwischen Programmiergerät 20 und Automatisierungsgerät 12 dargestellt. Das Automatisierungsgerät 12 umfasst in an sich bekannter Art und Weise einen Speicher 24 und eine Verarbeitungseinheit 26, also z. B. einen Prozessor. In dem Speicher 24 ist ein vom Automatisierungsgerät 12 ausführbares Anwenderprogramm 28 hinterlegt, mit dem definiert ist, wie die Steuerung des technischen Prozesses 18 (FIG 1) im Einzelfall erfolgt.

Das Programmiergerät 20 ist zur Erstellung des Anwenderprogramms 28 vorgesehen und umfasst dafür zunächst einen eigenen Speicher 30 und eine eigene Verarbeitungseinheit 32, also z. B. einen Prozessor. In den Speicher 30 ist eine Entwicklungsumgebung 34 ladbar, die zumindest einen Editor 36 zum Erstellen oder Verändern eines Anwenderprogramms 28 umfasst. Üblicherweise beziehen sich Veränderungen an dem Anwenderprogramm 28 nicht direkt auf das im Automatisierungsgerät 12 gespeicherte Anwenderprogramm 28, sondern auf eine lokale Kopie des Anwenderprogramms 28, nämlich einen Quellcode 38, der im Speicher 30 des Programmiergeräts 20 hinterlegt ist und aus dem das Anwenderprogramm 28 generierbar ist. Dazu sind üblicherweise ein oder zwei Zwischenschritte vorgesehen, die im Zusammenhang mit der vorliegenden Erfindung von untergeordneter Bedeutung sind und insoweit nur kursorisch erwähnt werden. Danach wird aus dem Quellcode 38 ein ausführbarer Code 40 erzeugt, der nach einem Transfer auf das Automatisierungsgerät als Anwenderprogramm 28 ausführbar ist. Sofern hier und im Folgenden nicht von besonderer Bedeutung ist, welche Ausprägung des Anwenderprogramms 28 betroffen ist, werden die Begriffe Quellcode 38, ausführbarer Code 40 und Anwenderprogramm 28 synonym verwendet. Insbesondere wird auch der Quellcode 38, da er den Ursprung des Anwenderprogramms 28 darstellt, als Anwenderprogramm bezeichnet.

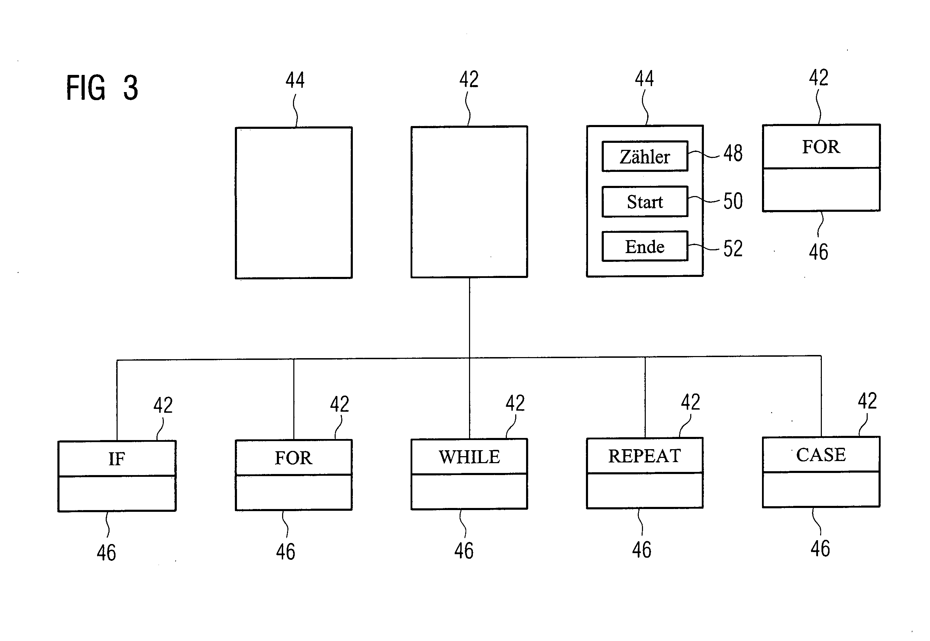

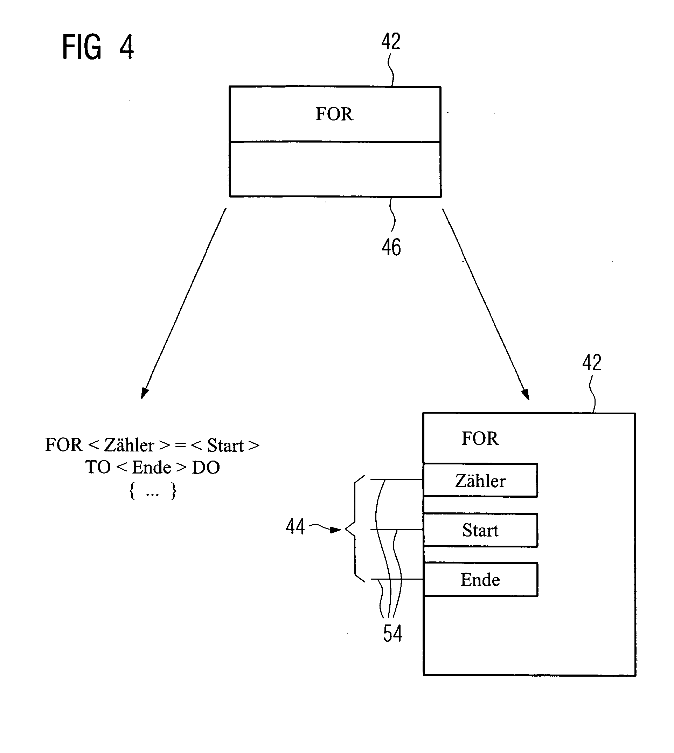

FIG 3 versucht eine graphische Darstellung des Grundgedankens der Erfindung, nämlich ein duales programmiertechnisches Verfahren für das Programmieren von Automatisierungsgeräten 12 einzuführen und dabei die Vorteile der graphischen sowie der textuellen Programmiersprachen einzigartig zu verbinden. Die Kernidee liegt darin, für grundsätzlich jede Programmanweisung, zumindest aber für Kontrollstrukturen 42, eine Variable als Versorgungsschnittstelle 44, insbesondere Versorgungs- und Entsorgungsschnittstelle, anzulegen und damit eine Dualität der Kontrollstruktur 42 und der in der Versorgungsschnittstelle 44 zusammengefassten korrespondierenden Parameter konsequent und durchgängig zu definieren. Die wechselseitige Zuordnung von Kontrollstruktur 42 und Versorgungsschnittstelle 44 stellt die Basis für das duale programmiertechnische Verfahren dar. Der Nutzen des Dualitätsprinzips für den Programmierer wird durch den Einsatz eines die Dualität unterstützenden Editors 36 (FIG 2) herbeigeführt, der gleichwertig nebeneinander eine Datenfluss- und eine Kontrollflusssicht anbietet, wie nachfolgend anhand von FIG 4 zu erläutern ist.

In FIG 3 sind exemplarisch einzelne Kontrollstrukturen 42 dargestellt, wobei das Schlüsselwort "IF" als Kurzform eine Kontrollstruktur der Form "IF <Bedingung> THEN <Anweisung(en)> ELSE <Anweisung(en)>" steht. Entsprechendes gilt für das Schlüsselwort "FOR" (FOR <Bedingung> DO <Anweisung(en)>), "WHILE" (WHILE <Bedingung> DO <Anweisung(en)>), "REPEAT" (REPEAT <Anweisung(en)> UNTIL <Bedingung>), "CASE" (CASE <Bedingung1>: <Anweisung(en), <Bedingung2>: <Anweisung(en)> ...). Im Anwenderprogramm 28 (FIG 2) können einzelne oder alle der dargestellten Kontrollstrukturen 42, ggf. auch mehrfach, vorkommen. In FIG 3 ist auf gleicher Ebene wie die Versorgungsschnittstelle 44 deshalb stellvertretend eine Kontrollstruktur 42 dargestellt, ohne auf deren konkrete Funktionalität, die im Übrigen für den Ansatz gemäß der Erfindung von eher nachgeordneter Bedeutung ist, einzugehen. Wichtig ist, dass jedes Mal, wenn im Anwenderprogramm 28 eine Kontrollstruktur 42 verwendet wird, also jedes Mal, wenn im Quellcode 38 eine Programmcodeanweisung vorgesehen wird, die einer Kontrollstruktur 42 entspricht, zu dieser eine passende Datenschnittstelle 44 angelegt wird.

Zur weiteren Erläuterung wird davon ausgegangen, dass bei der Anwendung des erfindungsgemäßen Verfahrens zu einem bestimmten Zeitpunkt im Quellcode 38 als Kontrollstruktur 42 eine FOR-Schleife angelegt wird. Eine FOR-Schleife ist bekanntlich eine Kontrollstruktur 42, mit der eine Gruppe von Anweisungen (engl. Statement List), also der Kontrollstrukturrumpf 46, mit einer bestimmten Anzahl von Wiederholungen ausgeführt wird. Dazu wird zum einen eine Zählervariable 48 verwendet und für diese Zählervariable 48 ein Start- und ein Endwert 50, 52 vorgegeben. In besonderen Ausführungsformen kann der Zählervariablen 48 noch eine Schrittweite zugeordnet sein; normalerweise wird jedoch davon ausgegangen, dass der Inhalt der Zählervariablen 48 während der Abarbeitung der FOR-Schleife ausgehend vom Startwert mit jedem Durchlauf FOR-Schleife inkrementiert wird, so lange, bis der Wert der Zählervariablen schließlich den Endwert erreicht. Für eine Kontrollstruktur 42 in Form einer FOR-Schleife ist dazu in FIG 3 rechts oben die zugehörige Versorgungsschnittstelle 44 entsprechend der vorangehenden Beschreibung mit weiteren Details dargestellt, derart, dass erkennbar ist, dass die Versorgungsschnittstelle 44 zumindest eine Zählervariable 48 sowie einen zu Beginn der Iteration durch die Zählervariable anzunehmenden Startwert 50 und einen während der Iteration ständig überprüften Endwert 52 umfasst. Der Versorgungsschnittstellentyp für die Versorgungsschnittstelle 44 für eine FOR-Schleife als Kontrollstruktur 42 ist also ein zusammengesetzter Datentyp. An diesem Beispiel ist bereits auch erkennbar, dass jede Kontrollstruktur 42 ihre eigene Versorgungsschnittstelle 44 erfordert, weil z. B. eine erste FOR-Schleife eine andere Zählervariable 48 verwenden kann, als dies für eine an anderer Stelle im Anwenderprogramm 28 vorgesehene FOR-Schleife der Fall ist. Des Weiteren ist auch leicht einsehbar, dass unterschiedliche FOR-Schleifen unterschiedliche Start- und Endwerte 50, 52 erfordern. Darüber hinaus sind aber für unterschiedliche Typen von Kontrollstrukturen 42, also eine FOR-Schleife als Beispiel für einen ersten Kontrollstrukturtyp und eine WHILE-Schleife als Beispiel für einen anderen Kontrollstrukturtyp, zur Instanziierung einer Versorgungsschnittstelle 44 bei Verwendung einer Kontrollstruktur 42 dieses Typs jeweils darauf abgestellte Versorgungsschnittstellentypen vorgesehen. Die Darstellung eines Versorgungsschnittstellentyps unterscheidet sich im Grundsatz nicht von der Darstellung einer Versorgungsschnittstelle 44, nachdem die Versorgungsschnittstelle 44 lediglich die Instanziierung einer Variablen des Versorgungsschnittstellentyps darstellt. Wichtig ist aber, dass grundsätzlich zu jedem Kontrollstrukturtyp ein Versorgungsschnittstellentyp gehört und dass bei Verwendung einer Kontrollstruktur als Versorgungsschnittstelle 44 eine Variable des jeweiligen Versorgungsschnittstellentyps instanziiert wird. Bei einer späteren Ausführung des Anwenderprogramms 28 wird der Kontrollstrukturrumpf 46 ausschließlich anhand von Daten gemäß der Versorgungsschnittstelle 44 aufgerufen/ausgeführt.

FIG 4 versucht eine zeichnerische Darstellung der mit der Erfindung möglichen textuellen Programmierung einerseits und der graphischen Programmierung andererseits. Dafür ist in FIG 4 oben als Beispiel für eine Kontrollstruktur 42 mit einem zugeordneten Kontrollstrukturrumpf 46, also einer oder mehrerer entsprechend den durch die Kontrollstruktur 42 festgelegten Bedingungen auszuführender Programmcodeanweisungen, eine FOR-Schleife dargestellt. Eine an sich bekannte textuelle Entsprechung der FOR-Schleife ist auf der linken Seite in FIG 4 dargestellt. Auf der rechten Seite in FIG 4 ist für die graphische Programmierung eine graphische Entsprechung gezeigt. Danach wird die jeweilige Kontrollstruktur 42 nach Art eines Funktionsblocks mit einem oder mehreren Eingängen 54 dargestellt. Die Anzahl der Eingänge 54 richtet sich nach der jeweiligen Versorgungsschnittstelle 44, also den für den jeweiligen Typ der darzustellenden Kontrollstruktur 42 definierten Versorgungsschnittstellentyp, und den davon umfassten Daten, also der Anzahl der darin übergebbaren Parameter. Bei einer FOR-Schleife als Kontrollstruktur 42 umfasst die Versorgungsschnittstelle 44 wie weiter oben bereits erläutert zumindest die drei Parameter "Zähler", "Start" und "Ende". Die Darstellungen in FIG 4 rechts unten und links unten sind also gleichwertig und können durch den Editor 36 je nach Vorwahl durch einen Benutzer erzeugt werden, wenn dieser für jede von dem Quellcode 38 umfasste Kontrollstruktur 42 auf eine der jeweiligen Kontrollstruktur 42 zugeordnete Versorgungsschnittstelle 44 zugreifen kann.

Der Leitgedanke des dualen programmiertechnischen Verfahrens besteht entsprechend darin, dass eine Programmcodeanweisung, wie insbesondere eine Kontrollstruktur 42, graphisch vorteilhaft mit den jeweiligen Operanden oder Parametern versorgt bzw. entsorgt werden kann, wenn die zugehörige Versorgungsschnittstelle 44 ebenfalls graphisch als Variable repräsentiert wird.

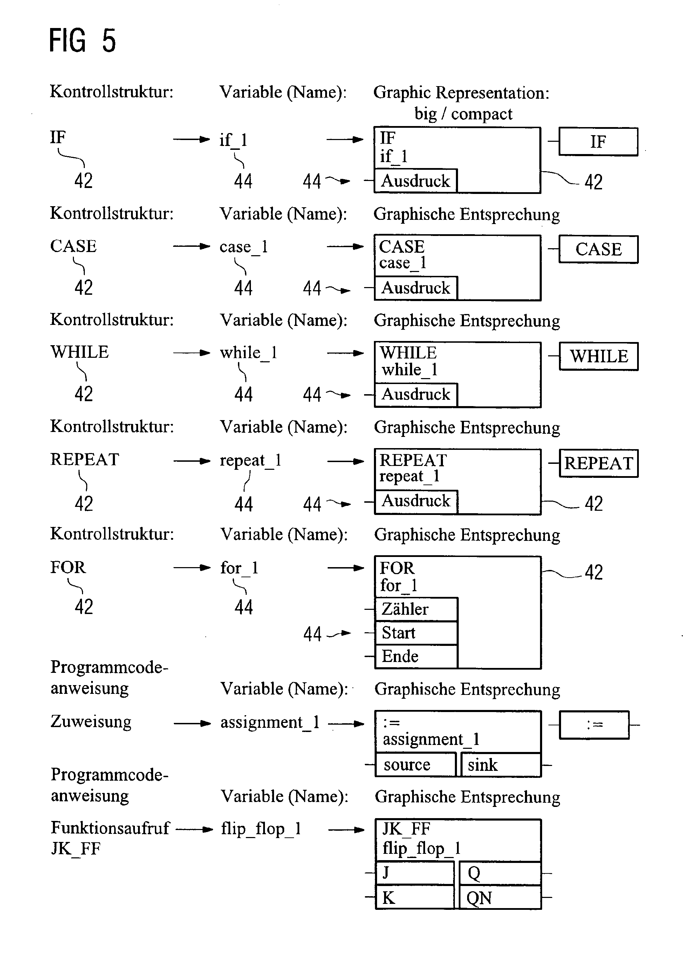

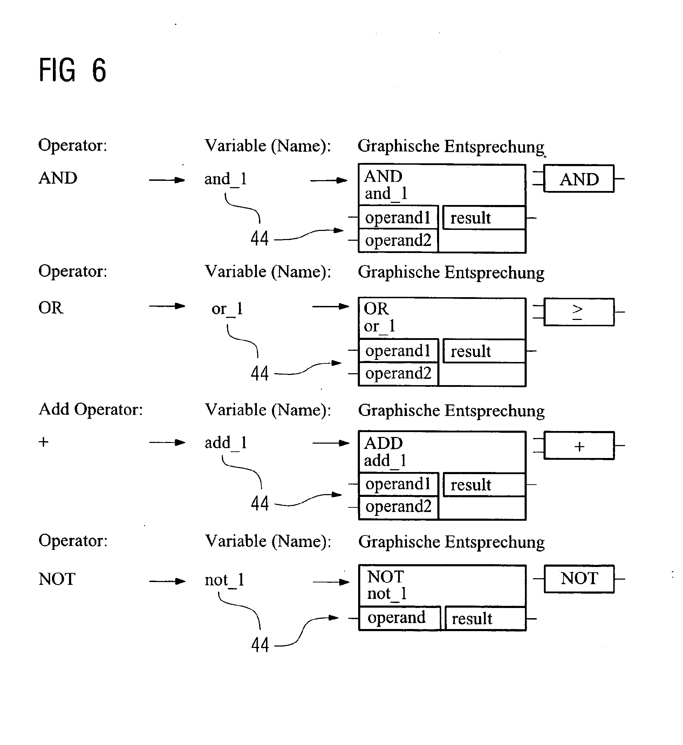

FIG 5 zeigt auf Basis der Darstellungen in FIG 3 und FIG 4 graphische und textuelle Darstellungen unterschiedlicher Kontrollstrukturen 42. In der Darstellung ist hier erstmals die Versorgungsschnittstelle 44 auch in Form der zugrunde liegenden Datenvariable dargestellt, und zwar für die Kontrollstruktur 42 "IF" als Variable "if_1", für die Kontrollstruktur 42 "CASE" als Variable "case_1", usw. In FIG 5 ist des Weiteren auch dargestellt, dass weitere Programmcodeanweisungen, etwa wie eine Zuweisung oder ein Funktionaufruf, in gleicher Weise wie Kontrollstrukturen 42 bei Verwendung einer der Programmcodeanweisung zugeordneten Versorgungsschnittstelle 44 in dualer Form sowohl textuell als auch graphisch darstellbar sind. Ähnliches gilt, wie FIG 6 zeigt, für Programmcodeanweisungen in Form von unären oder binären Operationen, wobei als unäre Operation der Operator "NOT" dargestellt ist und wobei die Operation "AND", "OR", "+", usw. Beispiele für binäre Operationen sind. Weitere binäre Operationen wie z. B. "MOD" kommen genauso in Betracht.

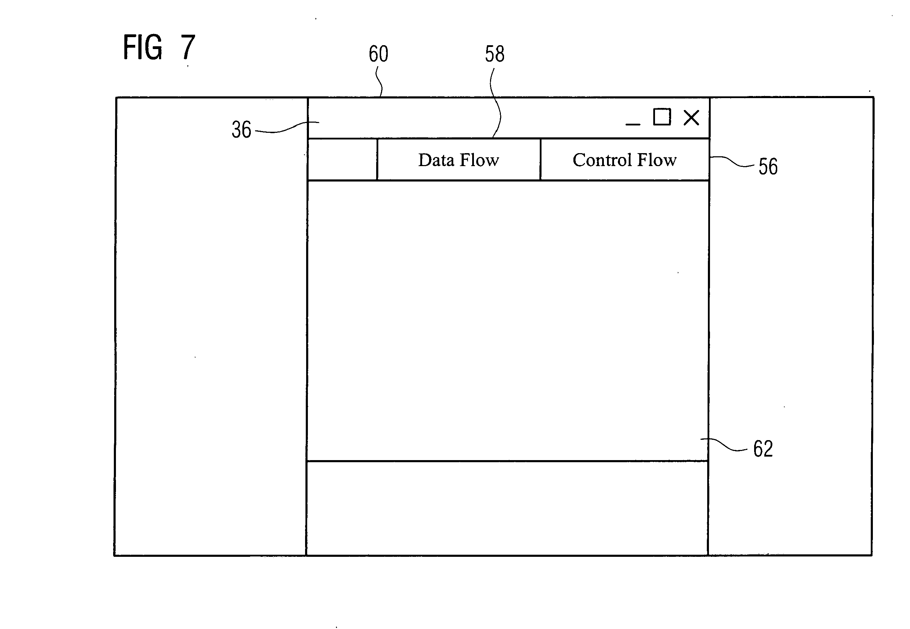

FIG 7 zeigt ein Beispiel, wie das duale programmiertechnische Verfahren durch einen entsprechenden Editor 36 (FIG 2) auf einem Computersystem wie einem Programmiergerät 20 (FIG 2) unterstützt werden kann. Der Editor 36 unterscheidet für die Programmierung einzelner Programmorganisationseinheiten (Programm, Funktionsbaustein, Funktion gemäß IEC 61131-3) neuartig zwei Sichten, nämlich eine Datenflusssicht und eine Kontrollflusssicht, die in FIG 7 mit zwei bei graphischen Bedienoberflächen üblicherweise selektierbaren so genannten Tabs 56, 58 als "Data Flow" und "Control Flow" dargestellt sind. Der Editor 36 selbst oder das von diesem auf einer Anzeigeeinheit des Programmiergeräts 20 dargestellte Fenster wird durch dessen so genannte Titelzeile 60 repräsentiert. Das Fenster umfasst neben den beiden Tabs 56, 58 zumindest einen Arbeitsbereich 62, in dem je nach ausgewähltem Tab 56, 58 die Darstellung der von dem Quellcode 38 des Anwenderprogramms 28 umfassten Programmcodeanweisungen entweder in textueller oder graphischer Form erfolgt. Aufgrund der auswählbaren Tabs 56, 58 werden beide Sichten, also Datenfluss- und Kontrollflusssicht, vom Editor 36 koexistierend bereitgestellt. Die vorgenannten Tabs 56, 58 sind also ein weiteres Beispiel für ein Mittel zur Auswahl eines Darstellungsmodus und insofern auch ein Beispiel für ein Mittel zur umschaltbaren Darstellung des Anwenderprogramms 38.

In der Datenflusssicht dominieren die Datenvariablen, wohingegen in der Kontrollflusssicht der Ablauf der Programmcodeanweisungen dominiert. Trotzdem können beide Sichten als gleichwertig betrachtet werden. In beiden Sichten kann prinzipiell eine Programmorganisationseinheit vollständig programmiert werden. Im Gegensatz zu herkömmlichen Programmierwerkzeugen, die nur eine der beiden Programmiertechniken, also entweder textuelle Programmierung oder graphische Programmierung, erlauben, werden im erfindungsgemäßen dualen programmiertechnischen Verfahren beide Programmiertechniken, also textuelle Programmierung und graphische Programmierung, zusammen bereitgestellt. Damit wird eine effiziente Handhabung des Programmierwerkzeugs mit vollständigem Sprachumfang sichergestellt.

Herkömmliche textuelle Sprachwerkzeuge bieten gerade beim Zuweisen von Variablen, z. B. in der Form "a = b", vergleichsweise wenig Komfort, weil der Name beider beteiligten Variablen explizit angegeben werden muss und ein Datenfluss, wie er in einer graphischen Darstellung implizit aufgrund einer Verschaltung der beteiligten Variablen offenbar wird, nicht übersichtlich dargestellt wird. Umgekehrt bieten herkömmliche graphische Sprachwerkzeuge, z. B. Kontaktplan oder Funktionsbausteinsprache, für die Programmierung von Ablaufstrukturen nur eine sehr eingeschränkte Funktionalität. Iterative Statements, wie z. B. FOR-, WHILE- oder REPEAT-Schleifen, werden gar nicht unterstützt. Diese Nachteile werden mit dem Ansatz gemäß der Erfindung überwunden. In der Datenflusssicht werden die graphischen Entsprechungen von z. B. Kontrollstrukturen 42 frei positionierbar angezeigt. Der Typ der jeweiligen Kontrollstruktur 42 oder des Operators ist von der graphischen Darstellung ebenso umfasst wie die jeweilige Versorgungsschnittstelle 44. Um die Dualität vorteilhaft aufzuzeigen und auch in der Datenflusssicht den vollständigen Funktionsumfang anbieten zu können, umfasst die graphische Darstellung, z. B. die der Kontrollstruktur 42, die Nummer der korrespondierenden Programmcodeanweisung. Anhand der Nummern ist zugleich die Reihenfolge der Abarbeitung der einzelnen Programmcodeanweisungen ersichtlich und rudimentär modifizierbar. Zur Verdeutlichung der Reihenfolge sind auch weitere Darstellungsvarianten in der Datenflusssicht denkbar, z. B. eine Verbindungslinie. In der Datenflusssicht können beliebige Signalrückführungen graphisch programmiert werden, weil die Ein- und Ausgänge der einzelnen Funktionsblöcke beliebig miteinander verschaltet werden können und der Ausgang eines Funktionsblocks z. B. auf den Eingang 54 (FIG 4) eines anderen Funktionsblocks und damit z. B. eine Versorgungsschnittstelle 44 geleitet werden kann.

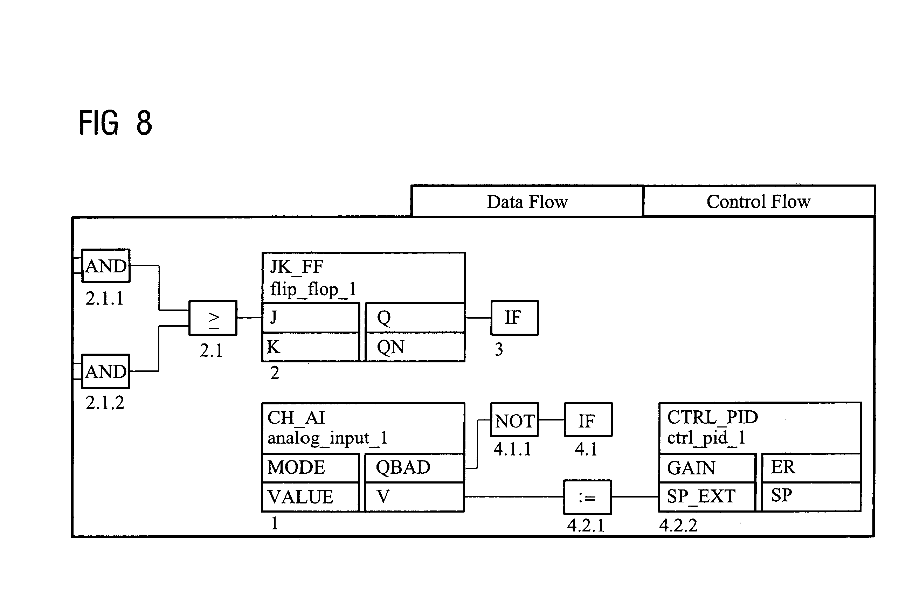

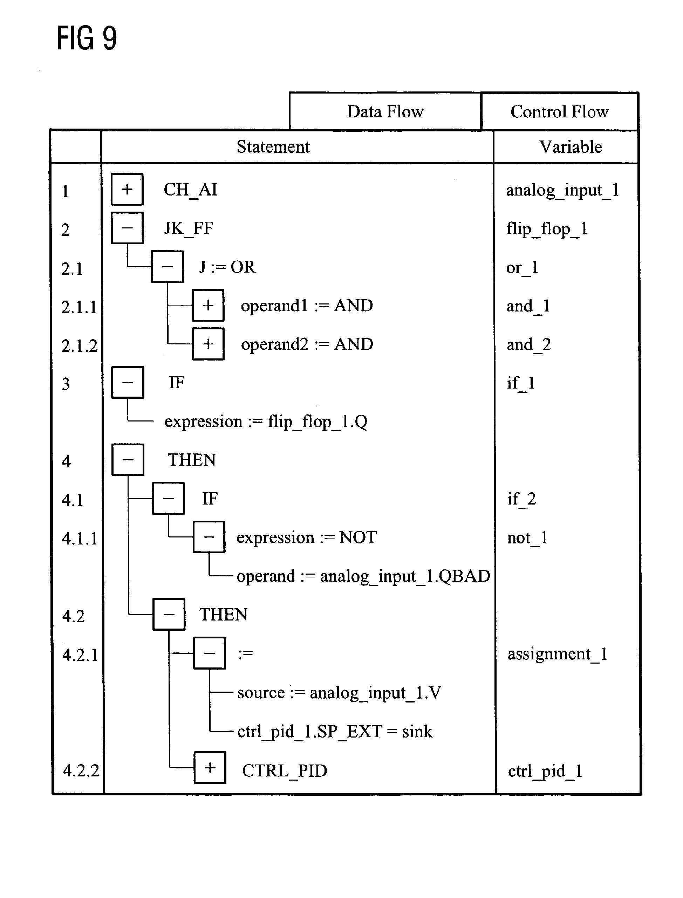

FIG 8 zeigt ein Beispiel für eine vom Editor 36 generierte Anzeige eines Ausschnitts aus dem Quellprogramm 38 des Anwenderprogramms 28 in der Datenflusssicht. In FIG 9 ist der gleiche Ausschnitt des Quellcodes 38 im Gegensatz zu FIG 8 in der Kontrollflussansicht gezeigt. Beide Darstellungen umfassen auch die oben erwähnte Nummerierung der Programmcodeanweisungen. Die Programmcodeanweisungen und Operatoren werden in der Kontrollflussansicht (FIG 9) zusammen mit zugeordneten Operanden als Ablaufstruktur vorzugsweise baumartig angezeigt. Der Datenfluss wird implizit mit Hilfe der zugeordneten Operanden beschrieben. Geschachtelte Ablaufstrukturen, wie z. B. Bedingungen, Fallunterscheidungen oder Schleife, lassen sich am besten baumartig mit einem textuellen Editor beschreiben. Dabei umfasst die Darstellung auch graphische Elemente, die an anderer Stelle bei der Visualisierung baumartiger Strukturen das Anzeigen und Verbergen von Teilbäumen erlauben. Hier wird auf Basis dieser Anzeigeelemente das Auf- und Zuklappen einzelner Blöcke ermöglicht. In der Darstellung in FIG 9, die mit der Darstellung in FIG 8 korrespondiert, sind neben den einzelnen Programmcodeanweisungen die systemseitig als Versorgungsschnittstelle 44 angelegten Datenvariablen angezeigt. Die Datenvariablen können vom Programmierer umbenannt werden. Dazu wird nochmals auf die Darstellung in FIG 5 und FIG 6 verwiesen, wobei in FIG 5 für die dort gezeigten Kontrollstrukturen 42 die automatisch mit Verwendung der jeweiligen Kontrollstruktur 42 generierte Datenvariable/Versorgungsschnittstelle 44, d. h. die Instanziierung einer Variablen vom Typ des jeweiligen Versorgungsschnittstellentyps mit dem Schlüsselwort der jeweiligen Kontrollstruktur 42, gefolgt von einem Unterstrich und einer ganzen Zahl dargestellt ist. Zur Unterscheidung wird bei der automatischen Instanziierung dieser Variablen die ganze Zahl für weitere Vorkommen der gleichen Kontrollstruktur 42 inkrementiert, so dass sich als Versorgungsschnittstelle 44 für die fünfte in einem Anwenderprogramm 28 vorkommende REPEAT-Schleife die Variable "REPEAT_5" ergibt. Diese Variablenbezeichner können vom Benutzer je nach Bedarf durch aussagekräftige Bezeichner ersetzt werden.

Beim Programmieren einer Programmcodeanweisung in der Kontrollflusssicht wird diese in die baumartige Ablaufstruktur eingefügt. Gleichzeitig entsteht in der Datenflusssicht als Versorgungsschnittstelle 44 eine korrespondierende Datenvariable. Wechselt der Programmierer von der Kontrollflusssicht in die Datenflusssicht, wird die korrespondierende Datenvariable vorteilhaft besonders gekennzeichnet, z. B. als selektiert markiert. Wird umgekehrt in der Datenflusssicht eine Datenvariable zu einer bestimmten Programmcodeanweisung, z. B. zu einer bestimmten Kontrollstruktur, angelegt, entsteht gleichzeitig die korrespondierende Anweisung in der Kontrollflusssicht.

Der Programmierer kann mit der dualen Programmiertechnik vorteilhaft beide Sichten wechselseitig nutzen, abhängig davon, welcher Programmieraspekt - Datenfluss oder Kontrollfluss - gerade im Vordergrund steht. Die vom Editor 36 umfassten Programmiermittel sind für jede Sicht sinnvollerweise optimiert, um eine möglichst effiziente Programmierung zu ermöglichen. In der Datenflusssicht wird entsprechend ein Verschalten von Signalen, also z. B. der Datenvariablen, durch einfaches Klicken erst auf das eine Signal und danach auf das andere Signal per Computermaus besonders unterstützt. Die Reihenfolgen der baumartig organisierten Programmcodeanweisungen können dagegen leichter im Kontrollflusseditor nach einer entsprechenden Einfach- oder Mehrfachselektion mit der Computermaus auf an sich bekannte Art und Weise, z. B. per "Drag and Drop", oder per Computertastatur verändert werden. Natürlich werden in beiden Sichten Standardoperationen, wie Kreieren, Löschen, Verschieben und Kopieren, von Programmcodeanweisungen und korrespondierenden Datenvariablen/Versorgungsschnittstellen sowie weitere sinnvolle Bedienkommandos angeboten.

Das duale programmiertechnische Verfahren kombiniert die Vorteile der graphischen sowie der textuellen Programmiersprachen in idealer Art und Weise und definiert damit einen neuen Programmierstandard. Die Dualität von graphischer und textueller Programmiertechnik erlaubt dem Programmierer jederzeit die freie Wahl, welche Programmiermittel im Einzelfall bevorzugt eingesetzt werden sollen. Ein wesentlicher Vorteil des Ansatzes gemäß der Erfindung besteht in der Vollständigkeit des Funktionsumfangs der Sprache, denn im Gegensatz zu herkömmlichen graphischen Sprachen, wie Kontaktplan und Funktionsbausteinsprache, braucht der Programmierer nicht auf gewohnte Kontrollstrukturen 42 (IF, CASE, FOR, WHILE, etc.) zu verzichten. In üblicher Art und Weise kann das Anwenderprogramm 28 demnach auch geschachtelte Ablaufstrukturen umfassen. Das Programmieren erfordert weniger Spezialkenntnisse, denn Programmierkenntnisse in höheren Programmiersprachen bilden bereits eine erste gute Grundlage, was sich auf eine Reduzierung von Ausbildungszeiten des eingesetzten Personals positiv auswirkt. Darüber hinaus lassen sich komplexe Konstrukte, wie Verzweigungen oder Schleifen, graphisch in der Datenflusssicht einfacher und schneller per Mausklick programmieren und auch später zu Wartungszwecken und dergleichen schneller erfassen. Im Hinblick auf eine mit dem Ansatz gemäß der Erfindung zu erwartende Reduzierung von Entwicklungszeiten von Automatisierungsaufgaben ist als zentraler Aspekt zu nennen, dass die Datenflusssicht gemeinsam mit der Kontrollflusssicht einen besseren Überblick und eine deutlich bessere Handhabbarkeit des Programmierwerkzeugs als bisher bietet. Insbesondere kann das Ver- und Beschalten einzelner Signale anders als bei textuellen Sprachen effizient und einfach per Mausklick erfolgen und gleichzeitig in der Kontrollsicht der Programmablauf in von Hochsprachen gewohnter Art und Weise optimal festgelegt werden. Zudem können beliebige Signalrückführungen graphisch programmiert werden.

Zwischenergebnisse von Ausdrücken können an beliebigen Stellen des Programmrumpfes angesprochen werden. Zwischenergebnisse können auch nachträglich beobachtet werden, wenn eine entsprechende Lebensdauer dafür verwendeter Variablen vorgesehen ist. Als Variable mit unbegrenzter Lebensdauer kommen insbesondere die Versorgungsschnittstellen 44 in Betracht, wobei sich die Umwandlung in eine Variable mit unbegrenzter Lebensdauer am einfachsten durch Verwendung dafür vorgesehener so genannter Kompilierschalter erreichen lässt, alternativ kann systemseitig vorgesehen sein, dass einzelne, sämtliche oder ausgewählte oder auswählbare Versorgungsschnittstellen 44 als oder nach Art einer "static"-Variablen angelegt werden. Dieser Vorteil ist nutzbar, weil im dualen Programmierverfahren per Definition systembedingt für jede Programmcodeanweisung, insbesondere für jede Kontrollstruktur 42, eine Datenvariable, also eine Versorgungsschnittstelle 44, angelegt wird, auf die bei "normaler Lebensdauer" zeitlich begrenzt, also solange der Kontext der jeweiligen umgebenden Programmorganisationseinheit noch nicht verlassen ist, oder bei unbegrenzter Lebensdauer zeitlich unbegrenzt zugegriffen werden kann. Nachdem in der Automatisierungstechnik Programme typischerweise zyklisch bearbeitet werden, ist die Möglichkeit des Verfolgens von Variableninhalten, z. B. in Trend- oder Zustandsanzeigen, eine besonders vorteilhafte Eigenschaft der in dieser Hinsicht ertüchtigten Entwicklungsumgebung oder des zugrunde liegenden Verfahrens. Über eine Trendanzeige kann z. B. einfach aufgezeigt werden, ob eine Bedingung einer IF-Kontrollstruktur erfüllt war oder nicht.

Das duale Programmierverfahren kann in weiten Teilen auf die Norm IEC 61131-3 abgebildet werden. Die Erweiterungen gemäß dem Ansatz entsprechend der Erfindung widersprechen der bestehenden Norm nicht. Umgekehrt können herkömmlich textuelle erstellte Programme mittels Generator automatisch in das erfindungsgemäße Format transformiert werden.

Damit lässt sich die Erfindung kurz wie folgt darstellen: Die Erfindung betrifft ein Verfahren zum Betrieb eines Programmiergerätes 20, ein Computerprogramm zur Implementierung des Verfahrens und ein nach dem Verfahren arbeitendes Programmiergerät 20 oder ein Programmiergerät 20 mit einem solchen Computerprogramm, wobei mit dem Verfahren eine duale Programmierung von Anwenderprogrammen 28, d. h. eine umschaltbare Möglichkeit zur Programmierung entweder in einer textuellen oder graphischen Darstellung, möglich ist, was dadurch erreicht ist, dass zumindest einzelnen Programmcodeanweisungen, wie sie von dem Anwenderprogramm 28 umfasst sein können, eine Datenvariable als Versorgungsschnittstelle 44 zugeordnet ist, so dass die Versorgungsschnittstelle 44 in der graphischen Darstellung als Eingang eines die jeweilige Programmcodeanweisung, insbesondere eine Kontrollstruktur 42, repräsentierenden Funktionsblocks angezeigt werden kann.

## Patentansprüche

1. Verfahren zum Betrieb eines Programmiergerätes (20) zum Erstellen oder Verändern von Anwenderprogrammen (28) für eine Automatisierungslösung zur Steuerung und/oder Überwachung eines technischen Prozesses (18),
wobei das Anwenderprogramm (28) bei dessen Erstellung um Programmcodeanweisungen ergänzt wird oder zum Verändern des Anwenderprogramms (28) bestehende Programmcodeanweisungen gelöscht, ergänzt oder modifiziert werden,
wobei das Anwenderprogramm (28) als Programmcodeanweisungen auch Kontrollstrukturen (42) zur Steuerung einer Ausführung eines der Kontrollstruktur (42) zugeordneten Kontrollstrukturrumpfs (46) umfasst,
**dadurch gekennzeichnet,**
**dass** jedem Kontrollstrukturtyp zur Instanziierung einer Versorgungsschnittstelle (44) bei Verwendung einer Kontrollstruktur (42) dieses Typs ein Versorgungsschnittstellentyp zugeordnet ist,
**dass** zu jeder Kontrollstruktur (42) eine Variable des entsprechenden Versorgungsschnittstellentyps als Versorgungsschnittstelle (44) instanziiert wird und
**dass** die Kontrollstruktur (42) bei einer späteren Ausführung des Anwenderprogramms (28) den Kontrollstrukturrumpf (46) ausschließlich anhand von Daten gemäß der Versorgungsschnittstelle (44) aufruft.

2. Verfahren nach Anspruch 1, wobei bei einer graphischen Darstellung des Anwenderprogramms (28) oder Teilen desselben jede Kontrollstruktur (42) mit ihrer Versorgungsschnittstelle (44) als Eingang (54) dargestellt wird.

3. Verfahren nach Anspruch 2, wobei eine graphische Darstellung des Anwenderprogramms (28) einen Datenfluss umfasst, in dem dargestellt wird, wodurch der Eingang (54) einer Kontrollstruktur (42) und somit die Ausführung des Kontrollstrukturrumpfs (46) gesteuert wird.

4. Verfahren nach einem der vorangehenden Ansprüche, wobei bei einem Anwenderprogramm (28), das als Programmcodeanweisungen auch unäre oder binäre Operationen umfasst, für jede solche Operation eine zur Art der Operation passende Versorgungsschnittstelle (44) instanziiert wird.

5. Verfahren nach einem der vorangehenden Ansprüche, wobei für jede oder einzelne als Versorgungsschnittstelle (44) instanziierte Variablen eine unbeschränkte Lebensdauer auswählbar ist.

6. Programmiergerät zur Ausführung des Verfahrens nach einem der vorangehenden Ansprüche, welches zum Erstellen oder Verändern des Anwenderprogramms (28) einen Editor (36) umfasst, der eine umschaltbare Darstellung des Anwenderprogramms (28) in graphischer Form oder textueller Form erlaubt.

7. Programmiergerät nach Anspruch 6, wobei zur umschaltbaren Darstellung des Anwenderprogramms (28) ein Mittel zur Auswahl eines Darstellungsmodus vorgesehen ist und wobei je nach Darstellungsmodus die oder jede Kontrollstruktur entweder in textueller Form mit Daten aus der Versorgungsschnittstelle (44) in ebenfalls textueller Form oder als graphischer Funktionsblock mit der Versorgungsschnittstelle (44) als Eingang (54) darstellbar ist.

8. Programmiergerät nach Anspruch 6 oder 7, wobei, wenn beim Erstellen oder Verändern des Anwenderprogramms (28) eine Kontrollstruktur (42) eingefügt wird, das Einfügen der Kontrollstruktur (42) die automatische Instanziierung einer zum Typ der Kontrollstruktur (42) passenden Versorgungsschnittstelle (44) bewirkt.

9. Computerprogramm mit durch einen Computer ausführbaren Programmcodeanweisungen zur Implementierung des Verfahrens nach einem der Ansprüche 1 bis 5, wenn das Computerprogramm auf einem Computer, insbesondere einem Programmiergerät nach einem der Ansprüche 6, 7 oder 8, ausgeführt wird.

10. Computerprogrammprodukt, insbesondere Speichermedium, mit einem durch einen Computer ausführbaren Computerprogramm gemäß Anspruch 9.
